# EUROPEAN PATENT APPLICATION

(11) **EP 2 723 081 A2**
(43) Date of publication of application: **23.04.2014**
(21) Application number: 12799816.9
(22) Date of filing: 14.06.2012
(51) Int. Cl.: H04N 13/04, G03B 21/00

(54) **APPARATUS FOR DISPLAYING A THREE-DIMENSIONAL SPHERICAL IMAGE OF THE ENVIRONMENT OF THE EARTH**

(30) Priority: 16.06.2011 KR 20110058752
(71) Applicant: National Institute of Meteorological Research, Seoul 156-720 (KR)
(72) Inventor: LIM, Byung Hwan, Anyang-si Gyeonggi-do 430-030 (KR); RYOO, Sang Boom, Anyang-si Gyeonggi-do 430-042 (KR); KWON, Won Tae, Seoul 150-045 (KR)
(74) Representative: Tolfts, Pippa Helen
(86) International application number: PCT/KR2012/004704
(87) International publication number: WO 2012/173411

(57) **Abstract**

Provided is a three-dimensional display apparatus for displaying a global environment image on a spherical surface, namely, a three-dimensional spherical image display apparatus of a global environment which is configured such that the diameter of a sphere and the number of projectors can be variously changed according to the need.

## Description

### Technical Field

Embodiments of the present invention relate to a three-dimensional display apparatus capable of displaying a global environment image on a spherical surface, and more particularly, to a three-dimensional spherical image display apparatus of a global environment which is configured such that the diameter of a sphere and the number of projectors can be variously changed according to the need.

### Background Art

In general, an image display apparatus displays an image on a two-dimensional plane area embodied as a quadrilateral display. The image display apparatus according to the conventional art has a limitation in displaying an image such that since a display area is fixed in a quadrilateral shape, entire images of the earth cannot be simultaneously displayed, and only an image reflected on the quadrilateral plane can be displayed when it is intended to display natural phenomena of the air, sea and land of the earth.

In order to overcome the limitation in displaying the entire image and increase an education or virtual reality, provided are a panorama image apparatus, a panorama image hole and the like capable of realizing a 360° image by forming a ceiling surface as a spherical concave surface to project an image onto the concave surface.

Since the panorama image apparatus displays an image while covering an entire external environment of a viewer or a target of education, the viewer or the target of education can be provided with an image of the universe and can feel as if he or she is present in the center of the image, namely, in a real environment through an image displayer. A flat image apparatus's limitation that the 360° image is not displayed can be overcome, and an image implementation effect in the fields of the universe, a virtual experience and the like can be maximized.

However, it is difficult for the panorama image apparatus to display a subject having a spherical surface such as the earth's surface. Also, the panorama image apparatus is problematic in that an image effect which is like really seeing the entire earth cannot be obtained. That is, in light of an image displaying effect, the panorama image apparatus has a limit that an image of a spherical subject such as the earth is outputted to be different from a real image.

### Detailed Description of the Invention

### Technical Problem

An aspect of the present invention provides a three-dimensional spherical image display apparatus of a global environment capable of obtaining an image effect which is like seeing a real sphere by displaying an image regarding an external situation of a spherical surface such as a global environment image on a sphere.

Moreover, another aspect of the present invention provides a three-dimensional spherical image display apparatus of a global environment which is configured such that the diameter of a sphere and the number of projectors can be variously changed, the apparatus being easily moved to a place where the display of a spherical image such as a global environment image is needed and being installed at the place because the apparatus can be dissembled and assembled and has mobility.

### Technical Solution

According to an aspect of the present invention, there is provided a three-dimensional spherical image display apparatus of a global environment, including: a spherical image displayer for dividing spherical images according to each viewing angle to output the spherical images on a spherical surface; an image server for storing image data to be displayed on the spherical image displayer, dividing the stored image data into spherical images according to each viewing angle and providing the divided spherical images to the spherical image displayer; and an auxiliary image server showing explanation data regarding the image data displayed on the spherical surface.

The spherical image displayer may include: a spherical display unit having a spherical screen; an image projection unit having a plurality of projectors for projecting an image onto the spherical display unit; and a support unit having any one of a spherical support configured to support the spherical display unit and a wire, and a plurality of projector supports configured to support the plurality of projectors of the image projection unit, respectively, the spherical support and the plurality of projector supports being separated from or assembled to each other, wherein the support unit, the spherical display unit, and the image projection unit can be separated from each other according to the need, and can be then moved to a place where the display of an image is needed, thereby being assembled and installed at the place.

The spherical display unit may include: the spherical screen on which an image is displayed; and a plurality of speakers configured to play an audio signal included in the image as a sound and to output the sound.

The support unit may further include: the spherical support configured to support the spherical screen; the wire for hanging the spherical screen from a ceiling to support the spherical screen; and the plurality of projector supports configured to support the plurality of projectors.

The support unit may further include a floor support configured to fix and support the spherical support and the plurality of projector supports by connecting them to each other, the floor support having power and data cables received therein.

The image server may include: an image data base for storing image data including at least one of images and stereos to be displayed on a spherical surface; a spherical image data conversion unit for dividing images included in the image data into spherical areas opposed to each of the projectors and converting the divided images to images to be projected onto the spherical surface; a spherical image distribution unit for distributing the spherical images divided for each of the projectors to each of the projectors; an audio processing unit for converting audio data included in the image data to an audio signal which is an electric signal to be outputted to a speaker and outputting the converted audio signal; and an image audio interface unit to which the projectors for projecting the divided spherical images and the speakers for playing the audio signal as a sound signal are connected.

The image server may further include at least one of a communication unit for accessing the Internet and a remote control signal receiving unit for receiving a wireless radio wave signal for a local area network.

The image server may be implemented as various fixable or portable image playing devices such as a VCR-like image playing device, a desktop, a notebook computer, a tablet PC and the like which have a spherical image conversion and distribution function, an audio processing function, and an Internet access and local area network function.

The auxiliary image server may enable an auxiliary explanation material such as a presentation file, a video or the like with regard to the image data displayed on the spherical surface to be displayed on an LCD, an LED monitor or TV.

The three-dimensional spherical image display apparatus may further include a remote control terminal for remotely controlling a spherical image displaying function of the image server.

The remote control terminal may be a portable terminal in which an application for remotely controlling the image server as well as the spherical image displaying function of the imager server by accessing the image server is loaded, and which can be connected to the Internet.

The portable terminal may be any one of portable terminals including a 2G terminal, a smart phone or a tablet PC which can be connected to the Internet.

Also, the remote control terminal may be composed of a remote control for remotely controlling a spherical image displaying function of the image server by performing communication with the image server through a local area network. Any one communication method of an infrared-ray communication method, an RF communication method such as Bluetooth and the like may be applied to the local area network, and the remote control may be also composed of at least one of a Nintendo^{®} Wii remote control, nunchucks, Bluetooth dongles, an infrared remote control and an RF wireless remote control. The three-dimensional spherical image display apparatus may further include a transfer case configured to receive the image displayer and support unit being separated from each to be movable upon producing the apparatus in a small size.

### Advantageous Effects

In the embodiments of the present invention having the aforesaid configurations, as the spherical image of the global environment is displayed identical to a real environment image, information communicability and an educational effect possessed by the image can be remarkably improved.

Furthermore, in the embodiments of the present invention, as the three-dimensional spherical image display apparatus is manufactured in a small size having a spherical diameter of 50 cm or below, the components of the apparatus can be disassembled, assembled and installed and the apparatus has portability. Thus, an educational image or a presentation image to be displayed as various three-dimensional spherical images can be easily projected and displayed at a desired place using one apparatus without a need to install any separate fixed equipment for displaying three-dimensional spherical images.

### Brief Description of the Drawings

The accompanying drawings illustrate exemplary embodiments of the present invention and, together with the description, serve to explain principles of the present invention. In the drawings:
FIG. 1 is a configuration view of a three-dimensional spherical image display apparatus of a global environment 10 according to an exemplary embodiment of the present invention;
FIG. 2 is a functional block diagram of an image server 100 of FIG. 1;
FIG. 3 shows a smart phone which is an exemplary embodiment for a remote control terminal 200 of the image server of FIG. 1;
FIG. 4 is an installation state view of the three-dimensional spherical image display apparatus 10 having a spherical support 335; and
FIG. 5 is an installation state view of the three-dimensional spherical image display apparatus 10 in which a spherical screen is installed using a wire 315.

### Best Mode for Carrying Out the Invention

Hereinafter, preferred embodiments of the present invention will be described in detail with reference to the accompanying drawings.

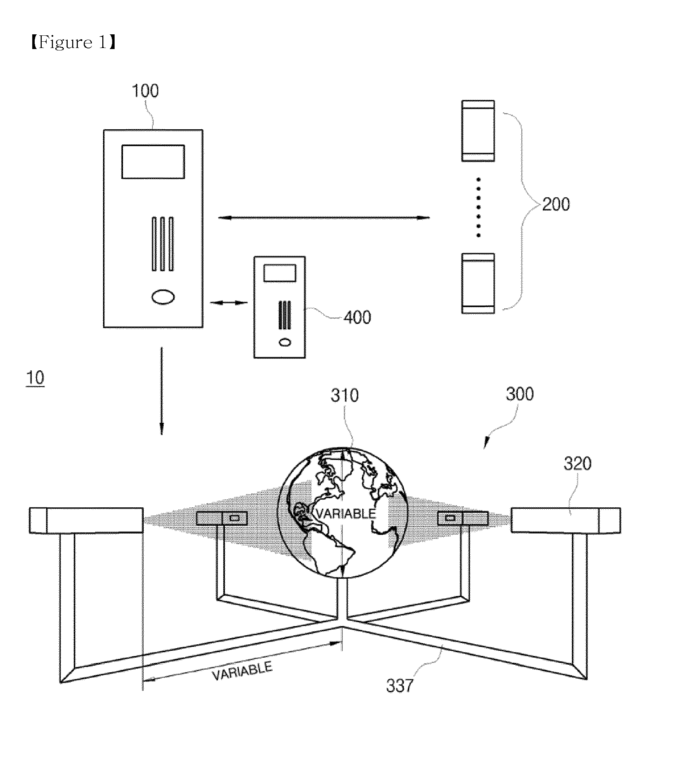

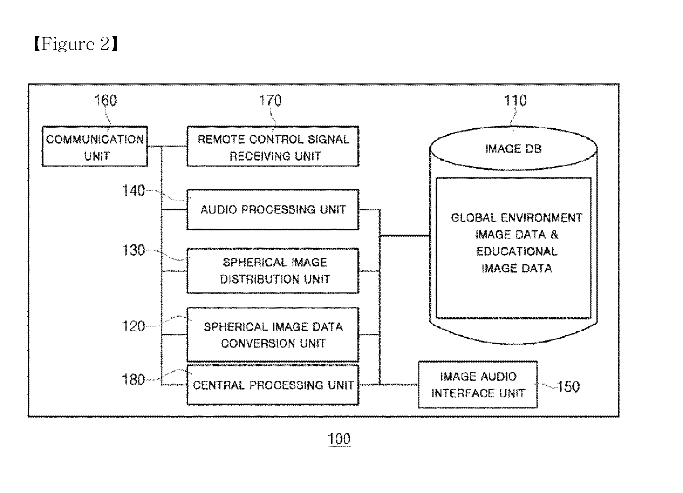

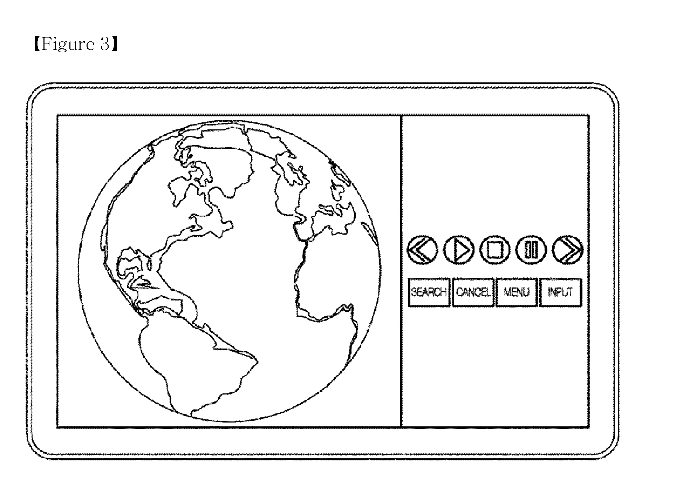

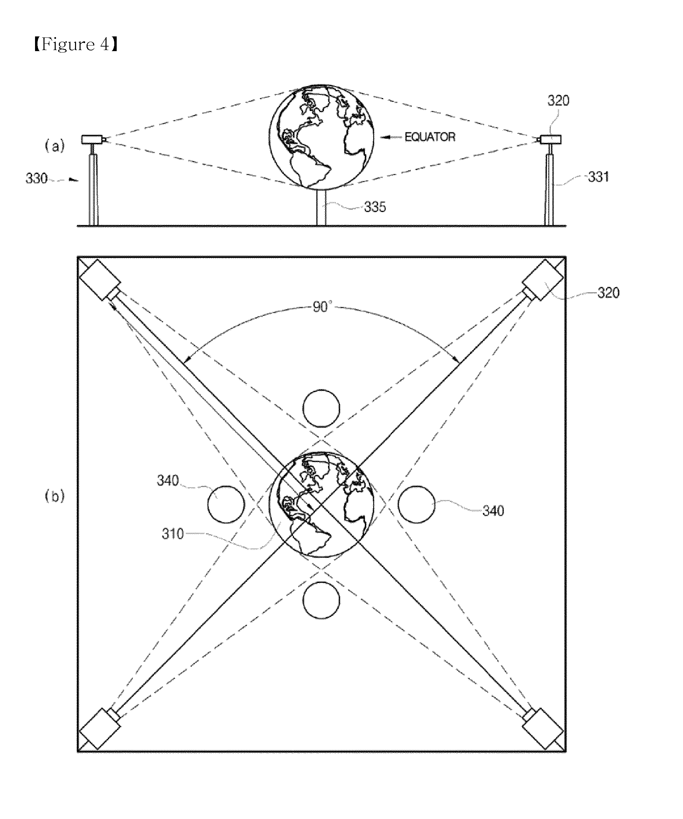

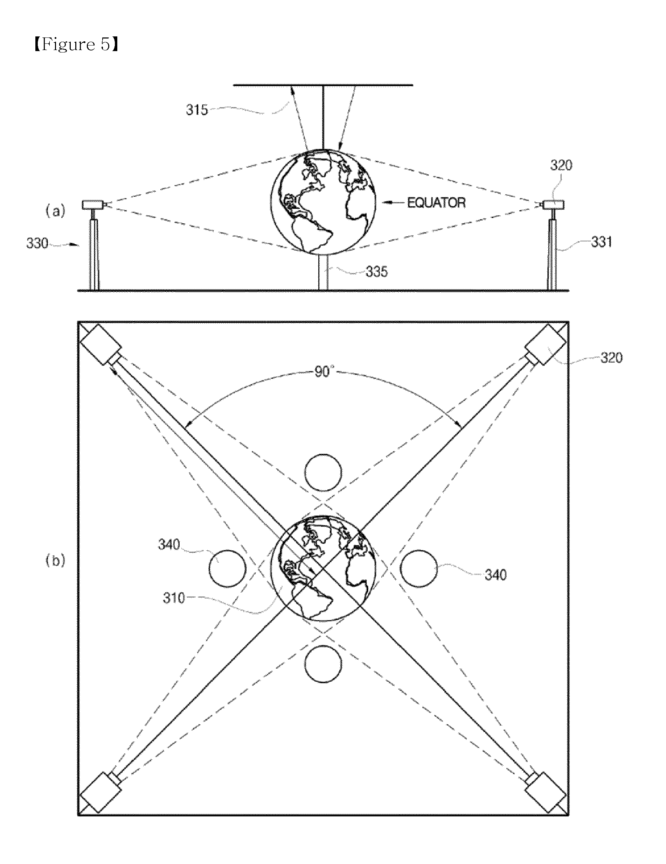

FIG. 1 is a configuration view of a three-dimensional spherical image display apparatus of a global environment 10 according to an exemplary embodiment of the present invention, FIG. 2 is a functional block diagram of an image server 100 of FIG. 1, FIG. 3 shows a smart phone which is an exemplary embodiment for a remote control terminal 200 of the image server 100 of FIG. 1, FIG. 4 is an installation state view of the three-dimensional spherical image display apparatus 10 having a spherical support 335, and FIG. 5 is an installation state view of the three-dimensional spherical image display apparatus 10 in which the spherical support 335 is fixed using a wire 315. In each of FIG. 4 and FIG. 5, (A) is a plan view, and (B) is a side view.

As shown in FIG. 1, the three-dimensional spherical image display apparatus 10 includes: a spherical image displayer 300 for displaying an image on a spherical screen 310 and playing and outputting an audio signal; and the image server 100 and an auxiliary image server 400 for providing spherical images and the audio signal to the spherical image displayer 300.

As shown in FIG. 2, the image server 100 includes: an image data base 110 for storing image data; a spherical image data conversion unit 120 for converting image data into spherical images; a spherical image distribution unit 130 for distributing the spherical images; an audio processing unit 140 for converting audio data included in the image data into an electric audio signal and outputting the converted electric audio signal; an image audio interface unit 150 having ports to which a plurality of projectors 320 and speakers 340 of the outside are connected; a communication unit 160; a remote control signal receiving unit 170; and a central processing unit 180.

The image data base 110 stores various kinds of image data relating to global environments such as calamity, disaster, resource distribution, ecology related information, ocean related information, atmospheric environment related information and weather related information. Examples of the image data may be an image of the universe for air or land related materials for the planets within the solar system, an ocean related image for materials concerning ocean currents, sea surface temperatures, tsunami models, the position and pursuance of a buoy, a land related image for a real time earthquake and thawing, topography, diastrophism, vegetation, terrestrial magnetism and the like, an educational video relating to a satellite, the pursuance of a typhoon, aerial observation data, the pursuance of carbon, aircraft movement and the like, and an image relating to the display of a numerical model/simulation for global environments, air, ocean changes and the like.

The spherical image data conversion unit 120 includes an image data processing processor for converting image data so that the image data stored in a plan surface can be displayed as divided images of a spherical surface, and divides flat image data stored in the image data base 110 into images corresponding to the number of projectors 320 and spherical areas to be targeted by the projectors 320 and then converts the divided images into images to be projected onto each spherical surface. Images being present in an overlapping boundary area among the image data divided to be projected from each of the projectors are divided so that the same images can be outputted. Also, when the flat image data is projected onto the spherical surfaces, image data processing is conducted, the image data processing being intended to correct distortion of the boundary so that the images can be projected as if a viewer really sees the surface of the sphere depending to the viewer's field of vision in spite of a change in angle of projection and a curvature change of the spherical surface.

That is, the spherical image data conversion unit 120 generates hemispherical images including a spherical position opposed by the projectors 320 according to each projector 320. Accordingly, the images projected from the projectors 320 onto the spherical screen 310 overlap each other in the boundary area, so that warpage in luminance or brightness resulting from the curvature change of the spherical screen 310 is not generated or is minimized.

The spherical image distribution unit 130 plays respective image data divided from the spherical image data conversion unit 120 as video signals and then outputs the video signals by dividing the video signals by ports to which the projectors 320 allocated to the respective image data are connected.

The audio processing unit 140 extracts audio data included in the image data, and then extracts audio signals which are appropriate to a predetermined sound or the respective speakers disposed depending on a stereophonic sound effect, and thereafter outputs the respective audio signals according to the ports of the image audio interface unit 150 to which the speakers fixed to output the respective audio signals are connected.

The image audio interface unit 150 has image ports to which projectors are connected, and various audio ports to which speakers are connected. Alternately, the image audio interface unit 150 has ports such as a serial port or a parallel port of a USB and the like for outputting an audio signal and an image signal in a lump.

The communication unit 160 is a communication interface which enables internet communication to be performed through a communication network, and is configured so that a control signal generated from the remote control terminal such as a smart phone in which an application for controlling the drive of the image server 100 is loaded can be received through the Internet.

The remote control signal receiving unit 170 receives a control signal from the remote control terminal 200 of the outside using at least one local area network method of an infrared communication method and an RF communication method such as Bluetooth and the like.

The central processing unit 180 is a central processing unit (CPU) for controlling the drive of the image server 100.

The image server 100 having the configuration is implemented as various fixable or portable image playing devices such as a VCR-like image playing device, a desktop, a notebook computer, and a tablet PC which have a spherical image conversion and distribution function, an audio processing function, an Internet access and local area communication function. Also, the image server 100 includes an input device such as a display unit of a monitor and the like, a keyboard and the like. Furthermore, a control program for controlling an implementation operation of a three-dimensional spherical image for a global environment is installed in a hard disk or is stored in a separate storage space such as an image database, and is then driven. To achieve this, the image server 100 has a separate hard disk and a memory for data operation processing.

The remote control terminal 200 is a user terminal which enables a three-dimensional spherical image displaying function of the image server 100 to be controlled at a remote place.

The remote control terminal 200 capable of performing the aforesaid function is implemented as a portable terminal such as a tablet device of a 2G terminal, an i-pad, a galaxy tap and the like, a smart phone and a table PC which can be connected to the Internet, and in which an application for remotely controlling the image server 100 or software such as emulated remote control software is loaded, or a wireless remote control such as a Nintendo^{®} Wii remote control, nunchucks, Bluetooth dongles and the like to which a wireless local area network method, such as an infrared communication method and an RF communication method of Bluetooth and the like, is applied. FIG. 3 illustrates the remote control terminal 200 as a smart phone so as to remotely control the three-dimensional spherical image display apparatus 10.

Software driven in the remote control terminal 200 has a user interface capable of performing various kinds of input such as the playing, stop and the like of spherical images, and the wireless remote control has input keys corresponding to each of functions of the software.

The spherical image displayer 300 includes: a spherical display unit, an image projection unit composed of a plurality of projectors, and a support unit 330.

The auxiliary image server 400 includes: an auxiliary explanation material, such as a presentation file or a video relating to image data displayed on a spherical surface, and an LCD, an LED monitor, TV or the like.

The spherical display unit includes: the spherical screen 310 in a portable size which is detachably attached to the support unit 330 or is composed of a spherical surface so as to be suspended from and fixed to a ceiling using the wire 315; and the plurality of speakers 340 for playing an audio signal as a sound signal. An external surface of the spherical screen 310 is coated with a coating material, which is appropriate for minimizing the reflection or scattering of light, so that an image projected from the projectors can be displayed.

The plurality of projectors 320 formed in the image projection unit are connected to an image output port or an USB output port of a VGA card embedded in the image audio interface unit 150 to output each of the divided images outputted from the spherical image distribution unit 130 to the spherical screen 310.

The support unit 330 includes: the spherical support 335 for supporting the spherical screen 310; projector supports 331 for supporting the projectors 320, respectively; and the wire 315 used for hanging and fixing the spherical screen 310 from and to a ceiling. According to the need, the support unit 330 may further include a floor support 337 for connecting and fixing the spherical support 335 and the projector supports 331 to each other, and having image, audio or power cables embedded therein. At this time, the spherical support 335, the projector supports 331 and the floor support 337 are configured to be connected and fixed to or separated from each other in a self-assembly form. The speakers are connected to each of predetermined output ports of the image audio interface unit 150. The spherical screen 310 may have a diameter of about 175 cm. However, the size is not limited if the size is appropriate for carrying and moving the spherical screen 310, and displaying output images.

Also, the three-dimensional spherical image display apparatus 10 according to the embodiments of the present invention further includes a transfer case so that the spherical display unit and the support unit 330 can be kept and moved together in a state of being separated from each other upon producing the apparatus in a small size, although the transfer case is not illustrated in the drawing. An inner part of the transfer case is filled with a shockproof member having a groove in which the spherical screen 310 is safely received, grooves in which the plurality of supports are mounted, and grooves in which the projectors 320 are safely received, and an outer part of the transfer case is made of an impact resistant material.

The three-dimensional spherical image display apparatus 10 further includes a plurality of small monitors which are appropriately disposed around the spherical image displayer 300, although this is not illustrated in the drawing. The small monitors become an auxiliary device for providing the explanation on an image projected onto the spherical screen 310 using a power point or a video. In this case, the image outputted onto the plurality of small monitors is provided by a separate notebook computer or a separate auxiliary image server 400 connected to the plurality of small monitors. The separate auxiliary image server may not be included if it is not necessary.

When the three-dimensional spherical image display apparatus 10 having the aforesaid configuration is moved to an installation place, the spherical support 335, the projector support 335, and the floor support 337 are first fixed and installed, the spherical screen 310 is then mounted and fixed to the spherical support 335, the projectors 320 are mounted to the projector supports 331, respectively, and the plurality of speakers 340 is disposed at a predetermined position. Furthermore, each of the projectors 320 and speakers 340 is connected to each of the ports of the image audio interface unit 150 of the image server 100.

In this case, the spherical screen 310 of the spherical display unit may be installed to be suspended from the ceiling using the wire 315. FIG. 5 is an installation state view of the three-dimensional spherical image display apparatus 10 in which the spherical screen 310 is installed at the ceiling using the wire 315.

As described above, when the installation of the three-dimensional spherical image display apparatus 10 is completed, the user drives the software which is loaded in a smart phone, a mobile communication terminal, and a tablet PC and which enables the display of a three-dimensional spherical image to be remotely operated, thereby controlling the drive of the three-dimensional spherical image display apparatus 10.

Alternately, control using the wireless remote control such as a Nintendo^{®} Wii remote control, nunchucks, Bluetooth dongles and the like to which the local area wireless network method such as an infrared communication method and an RF communication method of Bluetooth and the like is applied may be performed.

When the display of images using the three-dimensional spherical image display apparatus 10 of FIG. 1 to FIG. 5 is completed, the user can move with the apparatus in a state in which the spherical screen 310, the support unit 330 and the like are received in the transfer case after being separated from each other, upon producing the apparatus in a small size.

## Claims

1. A three-dimensional spherical image display apparatus of a global environment, comprising:
a spherical image displayer for dividing spherical images according to each viewing angle to output the spherical images on a spherical surface, the spherical image displayer being moved to a desired place in a state of being carried by a user, and being then installed at the place because the spherical image displayer can be dissembled or assembled upon producing the apparatus in a small size;
an image server for storing image data to be displayed on the spherical image displayer, dividing the stored image data into spherical images according to each viewing angle and providing the divided spherical images to the spherical image displayer; and
an auxiliary image server for providing explanation data.

2. The apparatus of claim 1, wherein the spherical image displayer comprises:
a spherical display unit including a spherical screen;
an image projection unit including a plurality of projectors configured to project an image onto the spherical display unit;
a support unit including any one of a spherical support configured to support the spherical display unit and a wire, and a plurality of projector supports configured to support the plurality of projectors of the image projection unit, respectively, the spherical support and the plurality of projector supports being configured so as to be separated from or assembled to each other according to the need,
wherein the support unit, the spherical display unit and the image projection unit can be separated from each other upon producing the apparatus in a small size, and can be then moved to a place where the display of an image is needed, thereby being assembled and installed at the place.

3. The apparatus of claim 2, wherein the spherical display unit comprises: the spherical screen on which an image is displayed; and a plurality of speakers configured to play an audio signal included in the image as a sound and to output the sound.

4. The apparatus of claim 2, wherein the support unit comprises: the spherical support configured to support the spherical screen; the wire for supporting the spherical screen by hanging it from a ceiling; and the plurality of projector supports configured to support the plurality of projectors.

5. The apparatus of claim 4, wherein the support unit further comprises a floor support configured to connect and support the spherical support and the plurality of projector supports to each other, the floor support having power and data cables received therein.

6. The apparatus of claim 1, wherein the image server comprises: an image data base for storing image data including at least one of images and stereos to be displayed on a spherical surface; a spherical image data conversion unit for dividing images included in the image data into spherical areas opposed to each of the projectors and converting the divided images to images to be projected onto the spherical surface; a spherical image distribution unit configured to distribute the spherical images divided for each of the projectors to each of the projectors; an audio processing unit configured to convert audio data included in the image data into an audio signal which is an electric signal to be outputted to speakers and to output the converted audio signal; and an image audio interface unit to which the projectors for projecting the divided spherical images and the speakers for playing the audio signal as a sound signal are connected.

7. The apparatus of claim 6, wherein the image server further comprises: at least one of a communication unit for accessing the Internet and a remote control signal receiving unit for receiving a wireless radio wave signal for a local area network.

8. The apparatus of any one of claims 1 to 7, further comprising a remote control terminal for remotely controlling a spherical image displaying function of the image server.

9. The apparatus of claim 8, wherein the remote control terminal is a portable terminal in which software for remotely controlling the image server as well as the spherical image displaying function by accessing the image server is loaded, the portable terminal being configured so as to be connected to the Internet.

10. The apparatus of claim 8, wherein the remote control terminal is composed of a remote control for remotely controlling the spherical image displaying function of the image server by performing communication with the image server through a local area network.

11. The apparatus of claim 1, further comprising a transfer case configured to receive the image displayer and support unit being separated from each other to be movable.
